# EUROPÄISCHE PATENTSCHRIFT

(11) **EP 1 052 089 B1**
(45) Veröffentlichungstag und Bekanntmachung des Hinweises auf die Patenterteilung: **10.09.2003**
(21) Anmeldenummer: 99123070.7
(22) Anmeldetag: 20.11.1999
(51) Int. Cl.: B32B 15/01, F41H 5/04, C22C 38/10, C22C 38/12, C22C 38/14, C22C 38/06

(54) **Verfahren zum Herstellen eines Verbundstahlbleches, insbesondere zum Schutz von Fahrzeugen gegen Beschuss**
Method of manufacturing a composite steel sheet, particularly for the protection of vehicles against bombardment
Procédé pour la fabrication d'une tôle d' acier composite, notamment pour la protection de véhicules contre bombardement

(30) Priorität: 11.05.1999 DE 19921961
(43) Veröffentlichungstag der Anmeldung: 15.11.2000
(73) Patentinhaber: Aktiengesellschaft der Dillinger Hüttenwerke, 66763 Dillingen (DE)
(72) Erfinder: Dilg, Christoph, Dr., 66763 Dillingen (DE); Hofmann, Uwe, 66701 Beckingen (DE); Just, Claus, Dr, 66763 Dillingen (DE); Rögele, Hans-Jürgen, 66763 Dillingen (DE); Schönberger, Helmut, 66740 Saarlouis-Beaumarais (DE); Vogt, Jürgen, 66763 Dilligen-Diefflen (DE)
(74) Vertreter: Bernhardt, Winfrid, Dr.-Ing.

(56) Entgegenhaltungen:
- DE-A- 4 309 558
- DE-A- 4 344 879
- DE-U- 7 915 552
- GB-A- 2 167 436
- US-A- 3 322 580
- US-A- 3 453 102

## Beschreibung

Die Erfindung bezieht sich auf ein Verfahren zum Herstellen eines Verbundstahlbleches aus martensitaushärtendem Stahl, insbesondere zum Schutz von Fahrzeugen, insbesondere Personen- und Werttransportfahrzeugen, gegen Beschuß und Einwirkung von Explosivstoffen, mit einer härteren Außenlage und einer zäheren Innenlage.

Ein solches Verbundstahlblech ist aus der DE 43 44 879 C2 bekannt.

Die Außenlage weist hier 4,0 bis 6,0% Mo, 17,0 bis 18,0% Ni, < 0,05% Cr, 1,7 bis 1,8% Ti und 14,0 bis 15,0% Co auf, die Innenlage 4,0 bis 6,0% Mo, 17,0 bis 18,0% Ni, <0,08% Cr, 0,5 bis 0,8% Ti und 7,0 bis 9,0% Co; beide Lagen enthalten ferner < 0,02% C, < 0,06% Si, < 0,01% Mn, < 0,01% P, < 0,01% S und unter < 0,02% Cu, Rest Fe und herstellungsbedingte Verunreinigungen.
An zwei Blöcken der beiden Stähle soll je eine Kontaktfläche durch Hobeln geebnet und gereinigt werden, worauf die Blöcke aufeinandergelegt und gegeneinandergepreßt und mit einer umlaufenden Schweißnaht miteinander verbunden werden sollen. Nach Erhitzen auf ca. 1300°C sollen sie mit einer Walzkraft von etwa 8 x 10⁴ kN ausgewalzt werden.

Ausgehend von den Angaben in dieser Patentschrift lassen sich nicht ohne weiteres Verbundstahlbleche herstellen, die den Anforderungen genügen.

Der Erfindung liegt die Aufgabe zugrunde, ein Verfahren zur Herstellung eines hohe Sicherheit gegen Beschuß und Einwirkung von Explosivstoffen bietenden Bleches zu schaffen.

Gemäß der Erfindung ist zu diesem Zweck bei einem Verfahren der eingangs genannten Art vorgesehen, daß der Stahl der Innenlage mit einer chemischen Zusammensetzung in Gew.-% von C ≤ 0,01, Si ≤ 0,1, Mn ≤ 0,1, P ≤ 0,005, S ≤ 0,005, Cu ≤ 0,1, Mo 4,80 bis 5,20, Ni 17,5 bis 18,5, Cr ≤ 0,1, Ti 0,55 bis 0,70, Co 8,0 bis 9,0 sowie ggf. Al 0,05 bis 0,15, und der Stahl der Außenlage mit einer, unter Reinigung durch Zonenumschmelzen erhaltenen, chemischen Zusammensetzung in Gew.-% von C ≤ 0,01, Si ≤ 0,1, Mn 0,02 bis 0,20, P ≤ 0,005, S ≤ 0,005, Cu 0,01 bis 0,20, Mo 4,80 bis 5,20, Ni 17,5 bis 18,5, Cr 0,01 bis 0,20, Ti 1,80 bis 1,95, Co 14,0 bis 15,5, Al 0,05 bis 0,15, Rest jeweils Fe und herstellungsbedingte Verunreinigungen, erzeugt wird.

Ein solchermaßen hergestelltes Verbundstahlblech erfüllt hohe Anforderungen, wie unten näher angegeben ist.

Im Vergleich mit der Herstellung des oben erwähnten, bekannten Verbundstahlbleches erhält nach der Erfindung mindestens die Außenlage einen anderen Aufbau.

In der chemischen Zusammensetzung unterscheidet sie sich insbesondere durch den hinzugekommenen Bestandteil Aluminium, durch andere, höhere Gehalte an Ti und Mn und durch einen im wesentlichen anderen, höheren Gehalt an Cu. Femer sind die Höchstgehalte an C, P und S herabgesetzt und der Mo-Bereich ist stark eingeschränkt. Von wesentlicher Bedeutung ist in diesem Zusammenhang der hinzugekommene Verfahrensschritt des Zonenumschmelzens.

Der nach dem Zonenumschmelzen noch vorhandene Al-Gehalt von 0,05 bis 0,15% bedeutet die Sicherstellung eines hohen oxidischen Reinheitsgrades: Der vorher vorhandene darüber hinausgehende Al-Gehalt verhindert die Bildung anderer Oxide, insbesondere des TiO und des Ti₂O₃, und scheidet sich zusammen mit dem durch ihn gebundenen Sauerstoff beim Zonenumschmelzen aus der Bramme aus. Der Stahl ist damit weitgehend frei von oxidischen Einschlüssen, die nach der Erfindungsvorstellung wegen ihrer jedenfalls bei der Beanspruchung des Stahles beim Beschuß nicht zu vernachlässigenden rißauslösenden Kerbwirkung möglichst vermieden werden sollten.
Etwa auf der gleichen Linie liegt die Verringerung der Seigerungsneigung durch die entscheidende Verminderung der Gehalte an Phosphor und Schwefel.

Der vorgesehene erhöhte Gehalt an Mn bewirkt eine verstärkte Mischkristallbildung im Nickelmartensit, die die Festigkeit und die Härte steigert.

In gleicher Weise werden die Festigkeit und Härte durch die Erhöhung des Kupfergehalts weiter verbessert.
In dem Stahl der Innenlage bleibt jedoch das Mn auf höchstens 0,1% begrenzt und wird das Cu auf höchstens die Hälfte verringert, um die bei der Innenlage gewünschte Zähigkeit nicht zu beeinträchtigen.
In gleichem Sinne ist, wenn auch bei größerer Überschneidung mit der Analyse des bekannten Verbundstahles, für die Außenlage ein Mindestgehalt an Cr vorgesehen und ein wesentlich vergrößerter Höchstgehalt; demgegenüber bleibt für die Innenlage der Cr-Gehalt wiederum begrenzt.

Die strikte Einschränkung des Mo-Gehalts ist angebracht, um in der Gesamtwirkung der vorgesehenen Legierungselemente und -gehalte reproduzierbar das Optimum zu erreichen.

Da nach der Erfindung nicht nur der Ti-Gehalt erhöht, sondern auch der C-Gehalt auf die Hälfte beschränkt ist, wird weniger Ti durch C gebunden und dadurch die festigkeits- und härtesteigernde Wirkung des Ti in dem Stahl der Außenlage noch stärker ausgenutzt, besonders durch Einlagerung in die intermetallischen Phasen. Gleichzeitig erzielt man ein besseres Zähigkeitsverhalten bei der stark dynamischen Beanspruchung im Beschuß.

Im Stahl der Innenlage ist der Ti-Gehalt dagegen verringert worden, um eine gute Zähigkeit einzustellen.

Für den Stahl der Innenlage ist ein Zonenumschmelzen nicht zwingend, aber gleichfalls vorteilhaft. Entsprechendes gilt für den hier wahlfreien Bestandteil Aluminium.

Wegen der gewünschten Reinheit sollten beide Stähle unter Vakuum erschmolzen werden, vorzugsweise durch Vakuuminduktionsschmelzen.

Die mechanische Herstellung des Verbundstahlbleches erfolgt bevorzugt in der Weise, daß die Außenlage und die Innenlage nach Säubern, z.B. Schleifen, der Berührungsflächen durch Sprengplattieren und anschließendes Walzen von zwei aus den beiden Stählen bestehenden Platten miteinander verbunden werden.

Möglich ist jedoch auch ein reines Walzplattieren. Hierfür sollten jedoch metallische Berührungsflächen an den beiden zu verbindenden Platten durch eine spanabhebende Bearbeitung, wie Hobeln oder Fräsen, geschaffen werden.

Darüber hinaus sollten die Platten vor dem Walzplattieren am Rand umlaufend dicht miteinander verschweißt werden und es sollte ein hohes Vakuum zwischen den beiden Platten erzeugt werden.

Die beste Widerstandsfähigkeit des Verbundstahlbleches gegen Beschuß wird erzielt, wenn für die Sicherheitsanforderungen nach der EN 1522 Beschuß-Klasse B7 (Hartkernmunition) das Dickenverhältnis zwischen der Außenlage und der Innenlage zwischen 1,5:1 und 4:1 bemessen wird und für die Sicherheitsanforderungen nach EN 1522 Beschluß-Klassen B6/B5 zwischen 0,3:1 und 1:1.

### Beispiel 1

Ein Verbundstahlblech wurde wie folgt hergestellt:

Für die Innenlage wurde in einem Vakuuminduktionsofen ein Stahl erschmolzen, der nach Zonenumschmelzen in einem Vakuumlichtbogenofen in Gew.-% 4,91 Mo, 17,75 Ni, 0,034 Cr, 0.60 Ti, 8,40 Co, 0,007 C, 0,038 Si, 0,032 Mn, 0,002 P, 0,005 S, 0,013 Cu und 0,105 Al aufwies.

Für die Außenlage wurde, gleichfalls im Vakuuminduktionsofen, ein Stahl erschmolzen, der nach Zonenumschmelzen im Vakuumlichtbogenofen in Gew.-% 4,93 Mo, 17,95 Ni, 0,037 Cr, 1,85 Ti, 14,19 Co, 0,006 C, 0,035 Si, 0,032 Mn, 0,003 P, 0,003 S, 0,018 Cu und 0,095 Al aufwies.

Die erhaltenen Blöcke wurden zunächst zu Brammen gewalzt, deren Dicke dem Dickenverhältnis der Lagen im Blech entsprachen.
Die Brammen wurden zur Bildung metallischer Berührungsflächen an einer Seite abgefräst und gesäubert, mit den Berührungsflächen zusammengelegt und durch Sprengplattieren miteinander verbunden.
Nach Erwärmen im Walzwerksofen auf 1250°C wurde die sprengplattierte Bramme in mehreren Stichen ausgewalzt.
In dem fertigen Blech hatte die als Innenlage vorgesehene Lage eine Dicke von 3,1 mm, die als Außenlage vorgesehene Lage eine Dicke von 5,7 mm.
Zwischen den frisch freigelegten metallischen Flächen der beiden Stähle von weitgehend gleichem, durch den Nickelmartensit bestimmten Gefüge kommt unter diesen Umständen in hohem Maße Metallbindung zustande.
Das Blech wurde lösungsgeglüht. Nach dem Zuschneiden von Probestücken wurden diese durch Auslagerung gehärtet.

Es war ein fester Verbundstahl entstanden mit folgenden Härten:

| | Härte [HRC] | | |
|---|---|---|---|
| Außenlage | 59,9 | 60,9 | 60,5 |
| Innenlage | 51,5 | 49,8 | 49,9 |

Zwei Proben von 300 x 300 mm² Fläche wurden in einem Beschußamt nach der EN 1522 Beschußklasse FB7 mit Vollmantel-Hartkemmunition vom Kaliber 7,62x51 beschossen.
Alle zwölf Schuß, jeweils sechs auf eine Probe, wurden gehalten.

### Beispiel 2

Ein Blech wie in Beispiel 1 wurde auf 3,0 mm Dicke der Innenlage und 5,5 mm Dicke der Außenlage abgearbeitet. Die Härten der beiden Lagen nach Auslagerung sind der nachfolgenden Tabelle zu entnehmen:

| | Härte [HRC] | | |
|---|---|---|---|
| Außenlage | 60,7 | 60,0 | 60,5 |
| Innenlage | 51,1 | 51,3 | 51,2 |

Eine Probe von 300 x 300 mm² Fläche allein wurde, sonst wie oben, mit zwölf Schuß belegt. Alle Geschosse wurden gehalten.

### Beispiel 3

Zur Herstellung der beiden Stähle wurde in gleicher Weise verfahren wie in Beispiel 1, jedoch erhielt der Stahl für die Außenlage die Zusammensetzung in Gew.-% 5,07 Mo, 18,00 Ni, 0,015 Cr, 1.83 Ti, 14,5 Co, 0,004 C, 0,029 Si, 0,051 Mn, 0,003 P, 0,003 S, 0,012 Cu, 0,107 Al.

Die erhaltenen Blöcke wurden zunächst wieder zu Brammen, deren Dicken dem Dickenverhältnis der Lagen im Blech entsprachen, gewalzt.
Die Brammen wurden zur Bildung metallischer Berührungsflächen an einer Seite abgefräst und gesäubert, mit den Berührungsflächen zusammengelegt und ringsum dicht verschweißt. Der von der Schweißnaht eingeschlossene, unvermeidliche Restraum zwischen den Berührungsflächen wurde auf unter 10⁻¹¹ Pa evakuiert.
Nach Erwärmen im Walzwerksofen auf 1250°C wurde das Brammenpaket in mehreren Stichen ausgewalzt.
In dem fertigen Blech hatte die als Innenlage vorgesehene Lage eine Dicke von 2,95 mm, die als Außenlage vorgesehene Lage eine Dicke von 5,40 mm.

Auch hier wurde in hohem Maße Metallbindung erzielt und ein fester Verbundstahl erhalten. Folgende Härten wurden, nach Auslagerung, gemessen:

| Härte [HRC] | | | |
|---|---|---|---|
| Außenlage | 60,7 | 60,7 | 60,8 |
| Innenlage | 49,7 | 49,3 | 48,5 |

Zehn Proben von 300 x 300 mm² Fläche wurden jeweils dreimal wie oben beschossen. Alle dreißig Schuß wurden gehalten.

### Beispiel 4

Ein weiteres Blech wurde, sonst wie in Beispiel 3, mit 1,5 mm Dicke der Innenlage und 5,0 mm Dicke der Außenlage gefertigt. Gemessene Härten:

| Härte [HRC] | | | |
|---|---|---|---|
| Außenlage | 59,6 | 61,1 | 61,2 |
| Innenlage | 49,7 | 49,7 | 49,5 |

Das Blech ist für eine Anwendung in Kombination mit anderen geschoßhemmenden Materialien vorgesehen.

## Patentansprüche

1. Verfahren zum Herstellen eines Verbundstahlbleches aus martensitaushärtendem Stahl, insbesondere zum Schutz von Fahrzeugen, insbesondere Personen- und Werttransportfahrzeugen, gegen Beschuß und Einwirkung von Explosivstoffen, mit einer härteren Außenlage und einer zäheren Innenlage,
**dadurch gekennzeichnet,**
**daß** der Stahl der Innenlage mit einer chemischen Zusammensetzung in Gew.-% von C ≤ 0,01, Si ≤ 0,1, Mn ≤ 0,1, P ≤ 0,005, S ≤ 0,005, Cu ≤ 0,1, Mo 4,80 bis 5,20, Ni 17,5 bis 18,5, Cr ≤ 0,1, Ti 0,55 bis 0,70, Co 8,0 bis 9,0 sowie ggf. Al 0,05 bis 0,15, und der Stahl der Außenlage mit einer, unter Reinigung durch Zonenumschmelzen erhaltenen, chemischen Zusammensetzung in Gew.-% von C ≤ 0,01, Si ≤ 0,1, Mn 0,02 bis 0,20, P ≤ 0,005, S ≤ 0,005, Cu 0,01 bis 0,20, Mo 4,80 bis 5,20, Ni 17,5 bis 18,5, Cr 0,01 bis 0,20, Ti 1,80 bis 1,95, Co 14,0 bis 15,5 und Al 0,05 bis 0,15, Rest jeweils Fe und herstellungsbedingte Verunreinigungen, erzeugt wird.

2. Verfahren nach Anspruch 1,
**dadurch gekennzeichnet,**
**daß** auch der Stahl der Innenlage durch Zonenumschmelzen gereinigt wird.

3. Verfahren nach Anspruch 1 oder 2,
**dadurch gekennzeichnet,**
**daß** der Stahl der Außenlage, vorzugsweise auch der Stahl der Innenlage, unter Vakuum erschmolzen wird, vorzugsweise durch Vakuuminduktionsschmelzen.

4. Verfahren nach einem der Ansprüche 1 bis 3,
**dadurch gekennzeichnet,**
**daß** die Außenlage und die Innenlage nach Säubern der Berührungsflächen durch Sprengplattieren und anschließendes Walzen von zwei aus den beiden Stählen bestehenden Platten miteinander verbunden werden.

5. Verfahren nach einem der Ansprüche 1 bis 3,
**dadurch gekennzeichnet,**
**daß** die Außenlage und die Innenlage nach Schaffung metallischer Berührungsflächen an zwei aus den beiden Stählen bestehenden Platten durch eine spanabhebende Bearbeitung durch Walzplattieren der beiden Platten verbunden werden.

6. Verfahren nach Anspruch 5,
**dadurch gekennzeichnet,**
**daß** die beiden Platten vor dem Walzplattieren am Rand umlaufend dicht miteinander verschweißt werden und ein Vakuum zwischen den beiden Platten erzeugt wird.

7. Verfahren nach einem der Ansprüche 1 bis 6,
**dadurch gekennzeichnet,**
**daß** für die Sicherheitsanforderungen nach der EN 1522 Beschluß-Klasse B7 (Hartkernmunition) das Dickenverhältnis zwischen der Außenlage und der Innenlage zwischen 1,5:1 und 4:1 bemessen wird.

8. Verfahren nach einem der Ansprüche 1 bis 6,
**dadurch gekennzeichnet,**
**daß** für die Sicherheitsanforderungen nach EN 1522 Beschluß-Klassen B6/B5 das Dickenverhältnis zwischen der Außenlage und der Innenlage zwischen 0,3:1 und 1:1 bemessen wird.

## Claims

1. Process for producing a composite steel sheet from maraging steel, in particular for protecting vehicles, in particular passenger and security vehicles, from bombardment and the action of explosives, having a harder outer layer and a tougher inner layer, **characterized in that** the steel of the inner layer is produced with a chemical composition, in % by weight, of C ≤ 0.01, Si ≤ 0.1, Mn ≤ 0.1, P ≤ 0.005, S ≤ 0.005, Cu ≤ 0.1, Mo 4.80 to 5.20, Ni 17.5 to 18.5, Cr ≤ 0.1, Ti 0.55 to 0.70, Co 8.0 to 9.0 and if appropriate Al 0.05 to 0.15, and the steel of the outer layer is produced with a chemical composition, obtained with purification by zone remelting, in % by weight of C < 0.01, Si ≤ 0.1, Mn 0.02 to 0.20, P < 0.005, S ≤ 0.005, Cu 0.01 to 0.20, Mo 4.80 to 5.20, Ni 17.5 to 18.5, Cr 0.01 to 0.20, Ti 1.80 to 1.95, Co 14.0 to 15.5 and Al 0.05 to 0.15, remainder in each case Fe and production-related impurities.

2. Process according to Claim 1, **characterized in that** the steel of the inner layer is also purified by zone remelting.

3. Process according to Claim 1 or 2, **characterized in that** the steel of the outer layer, and preferably also the steel of the inner layer, is melted in vacuo, preferably by vacuum induction melting.

4. Process according to one of Claims 1 to 3, **characterized in that** the outer layer and the inner layer, after the contact surfaces have been cleaned, are joined to one another by explosive cladding and subsequent rolling of two plates consisting of the two steels.

5. Process according to one of Claims 1 to 3, **characterized in that** the outer layer and the inner layer, after metallic contact surfaces have been created on two plates consisting of the two steels by a material-removing machining step, are joined by roll cladding of the two plates.

6. Process according to Claim 5, **characterized in that** prior to the roll cladding, the two plates are welded securely to one another all around the edge and a vacuum is produced between the two plates.

7. Process according to one of Claims 1 to 6, **characterized in that** the thickness ratio between the outer layer and the inner layer is set to between 1.5:1 and 4:1 in order to comply with the safety requirements corresponding to EN 1522 protection class B7 (armour-piercing munition).

8. Process according to one of Claims 1 to 6, **characterized in that** the thickness ratio between the outer layer and the inner layer is set to between 0.3:1 and 1:1 in order to comply with the safety requirements corresponding to EN 1522 protection classes B6/B5.

## Revendications

1. Procédé de fabrication d'une tôle en acier composite en acier maraging, en particulier pour la protection de véhicules, en particulier des véhicules de transport de personnes et de valeurs, contre le bombardement et l'effet d'explosifs, avec une couche extérieure dure et une couche intérieure plus tendre, **caractérisé en ce que** l'acier de la couche intérieure est produit avec une composition chimique en % en poids de C ≤ 0,01, Si ≤ 0,1, Mn ≤ 0,1, P ≤ 0,005, S ≤ 0,005, Cu ≤ 0,1, Mo 4,80 à 5,20, Ni 17,5 à 18,5, Cr ≤ 0,1, Ti 0,55 à 0,70, Co 8,0 à 9,0 ainsi que, le cas échéant Al 0,05 à 0,15 et l'acier de la couche extérieure est produit, avec une purification par fusion par zones, avec une composition chimique en % en poids de C ≤ 0,01, Si ≤ 0,1, Mn 0,0,2 à 0,20, P ≤ 0,005, S ≤ 0,005, Cu 0,01 à 0,20, Mo 4,80 à 5,20, Ni 17,5 à 18,5, Cr 0,01 à 0,20, Ti 1,80 à 1,95, Co 14,0 à 15,5 et Al 0,05 à 0,15, le reste étant à chaque fois du fer et les impuretés liées à la fabrication.

2. Procédé selon la revendication 1, **caractérisé en ce que** l'acier de la couche intérieure est également purifié par fusion par zones.

3. Procédé selon la revendication 1 ou 2, **caractérisé en ce que** l'acier de la couche extérieure, de préférence également l'acier de la couche intérieure, est fondu sous vide, de préférence par fusion par induction sous vide.

4. Procédé selon l'une quelconque des revendications 1 à 3, **caractérisé en ce que** la couche extérieure et la couche intérieure sont reliées l'une à l'autre après nettoyage des surfaces de contact par placage par explosion et laminage consécutif de deux plaques constituées des deux aciers.

5. Procédé selon l'une quelconque des revendications 1 à 3, **caractérisé en ce que** la couche extérieure et la couche intérieure sont reliées, après création de surfaces de contact métalliques sur deux plaques constituées des deux aciers par un usinage des métaux par enlèvement de copeaux, par placage par laminage des deux plaques.

6. Procédé selon la revendication 5, **caractérisé en ce que**, avant le placage par laminage, les deux plaques sont soudées de manière étanche l'une avec l'autre autour de la périphérie et qu'on réalise un vide entre les deux plaques.

7. Procédé selon l'une quelconque des revendications 1 à 6, **caractérisé en ce que**, pour des raisons de sécurité selon la norme EN 1522, classe de bombardement B7 (munition à noyau dur) le rapport des épaisseurs entre la couche extérieure et la couche intérieure est dimensionné entre 1,5:1 et 4:1.

8. Procédé selon l'une quelconque des revendications 1 à 6, **caractérisé en ce que**, pour des raisons de sécurité selon la norme EN 1522, classe de bombardement B6/B5, le rapport des épaisseurs entre la couche extérieure et la couche intérieure est dimensionné entre 0,3:1 et 1:1.
